# EUROPÄISCHE PATENTANMELDUNG

(11) **EP 1 452 790 A1**
(43) Veröffentlichungstag der Anmeldung: **01.09.2004**
(21) Anmeldenummer: 04002199.0
(22) Anmeldetag: 02.02.2004
(51) Int. Cl.: F16L 39/00

(54) **Abdicht- und Verspannelement zum Anschweissen an zwei lösbar zu verbindenden Doppelrohrleitungen**

(30) Priorität: 07.02.2003 DE 10305219
(71) Anmelder: Schlemenat, Alfred, 45701 Herten (DE)
(72) Erfinder: Schlemenat, Alfred, 45701 Herten (DE)

(57) **Zusammenfassung**

Eine Vielzahl von Bohrungen (9, 9') verbinden die Ringräume (2, 2') von zwei lösbar zu verbindenden Doppelrohrleitungen. Der Wärmeträger strömt nahezu direkt durch die zu verbindenden Bauteile. Im Gegensatz zu den bekannten Verbindungen gibt es in den Ringräumen keine Bereiche, die vom Wärmeträger nicht durchströmt werden. Im Rohrinnenraum (8) stellt sich ein nahezu gleichmäßiges Temperaturprofil ein.

Die Bohrungen (9, 9') weisen in Umfangsrichtung einen relativ kleinen Mittenabstand auf, so dass sowohl ein kleiner Strömungswiderstand für den Wärmeträger als auch ein optimaler Wärmeübergang zwischen diesen und den ringförmigen Bauteilen (6, 6') bei einem ausreichend großen Querschnitt zur Aufnahme der Belastungen aus temperaturbedingten Längendifferenzen zwischen den Innen- (3, 3') und Außenrohren (4, 4') gegeben ist.

Die Verspannung erfolgt in einem Montagevorgang mit einem ausserhalb an den ringförmigen Bauteilen (6, 6') wirkenden Verbindungssystem. Besondere Vorteile ergeben sich durch die Verwendung einer Verbindungsanordnung nach der EP 1 010 931.

## Beschreibung

Die Erfindung betrifft ein Abdicht- und Verspannelement zum Anschweißen an zwei lösbar zu verbindenden Doppelrohrleitungen. Diese finden beispielsweise Verwendung als Produktrohrleitungen, die mit einem Wärmeträger beheizt oder gekühlt werden.

Derartige, dem Fachmann bekannte Verbindungsanordnungen sind für bestimmte Durchmesserbereiche und Ausführungsformen seit Jahren in Großbetrieben der chemischen Industrie Bestandteile von aktuellen Werknormen. Diese weisen getrennte Verbindungen und Abdichtungen für die Innen- und Außenrohre auf. Während die Innenrohre größtenteils mit konventionellen Normflanschen abgedichtet und verspannt werden, endet das Außenrohr mit dem Heiz- / Kühlmedium vor der eigentlichen Verbindungsstelle und ist direkt am Flansch oder in einem axialen Abstand dazu mit dem Innenrohr verschweißt. Der Wärmeträger wird in separaten Rohrleitungen um die Verbindungsstelle geführt. Beide Konstruktionsformen weisen Bereiche auf, die vom Wärmeträger nicht durchströmt werden. Im Bereich der Verbindungsstelle stellt sich zwangsläufig eine Veränderung des Temperaturprofils ein. Dieses wirkt sich stets nachteilig auf das durchströmende Produkt im Innenrohr aus. Das Isolieren der Leitung erfordert zudem einen relativ großen Aufwand. Insgesamt ergeben sich hohe Fertigungs-, Montage- und Wartungskosten.

Aus der DE 43 18 872 ist eine Doppelrohranordnung bekannt, bei der die Enden der Innenrohrleitungen ebenfalls durch Flansche miteinander verbunden sind. Die außen liegende Rohrleitung wird durch eine gesonderte Flanschverbindung unter Einbindung einer Manschette miteinander verbunden. Diese umschließt komplett die innere Verbindung. Diese Ausführung ist für hohe Druckbelastungen nicht geeignet, zudem stellt sich im Ringraum ein ungünstiger Strömungswiderstand ein. Die DE 43 18 872 erfordert einen relativ großen Einbauraum, führt zu einem hohen Fertigungsaufwand und zu hohen Montage- / Wartungskosten.

Aufgabe der Erfindung ist es, den Verbindungsbereich von Doppelrohrleitungen so zu gestalten, dass bei gleichzeitiger Reduzierung der Herstellungs- und Wartungskosten der Einbauraum verkleinert, die zuvor beschriebenen Nachteile minimiert bzw. beseitigt werden und eine Vereinfachung der Montage erreicht wird.

Die Lösung dieser Aufgabe ist Gegenstand der kennzeichnenden Merkmale des Anspruchs 1. Die Unteransprüche beziehen sich auf vorteilhafte weitere Ausgestaltungen der Erfindung.

Eine Vielzahl auf dem Umfang angeordnete Bohrungen verbinden die Ringräume der beiden zu verbindenden Doppelrohrhälften so miteinander, dass das Heiz- / Kühlmedium nahezu direkt durch die zu verbindenden Bauteile strömt. Diese weisen eine kompakte Bauart auf. Innerhalb der Stirnflächen erfolgt die Abdichtung sowohl zum Rohrinnenraum als auch zur äußeren Umgebung. Bereiche in den Ringräumen, die bei den bekannten Verbindungen vom Wärmeträger nicht durchströmt werden, sind nicht mehr vorhanden. In der Verbindung stellt sich ein nahezu gleichmäßiges Temperaturprofil ein. Dieses wird durch die geringe radiale Erstreckung der Bauteile zudem noch positiv beeinflußt.

Die Anzahl und Abmessungen der Bohrungen werden entsprechend der erforderlichen Durchflussmenge des Wärmeträgers unter Berücksichtigung des Trag- und Verformungsverhaltens der tragenden Bauteile festgelegt. Zum optimalen Austausch der Temperatur zwischen dem Wärmeträger und den ringförmigen Bauteilen bei gleichzeitiger Reduzierung des Strömungswiderstandes für den Wärmeträger führt eine Minimierung des Mittenabstandes zu einer maximalen Anzahl der auf dem Umfang anzuordnenden Bohrungen. Der erforderliche Restquerschnitt zwischen zwei benachbarten Bohrungen wird durch die aufzunehmenden Belastungen aus temperaturbedingten Längendifferenzen zwischen den Innen- und Außenrohren bestimmt. Besteht die Möglichkeit, den Innendurchmesser der Produktrohrleitung im Bereich der Verbindung zu reduzieren, können die Bohrungen parallel zur Längsachse angeordnet werden. Dieses wirkt sich günstig auf die Herstellungskosten aus.

Die temperaturbedingten Längendifferenzen zwischen den Aussen- und Innenrohren, die als Hauptbelastung auf die ringförmigen Bauteile wirken, erzeugen entsprechende Stülpverformungen und somit Schrägstellungen der Stirnflächen. Diese beeinflussen das Dichtverhalten der Verbindung bzw. die erforderlichen Restdichtungskräfte, die auch im ungünstigsten Belastungsfall nicht unterschritten werden dürfen. Um dahingehende Aussagen über Größenordnungen der sich einstellenden Verformungen und Spannungen zu erhalten, wurden unter Annahme realistischer Belastungen Spannungs- und Verformungsanalysen erstellt. Die Ergebnisse wie auch die ersten industriellen Anwendungen bestätigen das optimale Zusammenwirken aller Bauteile.

Vergleichende Berechnungen zu den bekannten Verbindungen zeigen eine um den Faktor 2 höhere Aufnahme temperaturbedingter Längendifferenzen zwischen den Innen- und Aussenrohren.

Aufgrund der kompakten Bauart ist ein relativ geringer Einbauraum erforderlich. Die Gewichte der Bauteile reduzieren sich erheblich. Die Verspannung und Abdichtung erfolgt in einem Montagevorgang, entsprechend gering sind die Montage- und Wartungskosten. Isolierungen sind einfach und kostengünstig anzuordnen. Gegenüber den bekannten Verbindungen ergeben sich durch das nahezu gleichmäßig zu erreichende Temperaturprofil innerhalb der Produktleitung enorme wirtschaftliche Vorteile.

Die Verspannung der Doppelrohrleitungen erfolgt mit einem außen an den ringförmigen Bauteilen wirkenden Verbindungssystem. Es besteht aber auch die Möglichkeit, dieses an einem oder beiden ringförmigen Bauteilen direkt anzuordnen. Geometriebedingt führen axial angeordnete Schrauben an konventionellen Flanschverbindungen zu relativ großen Hebelarmen, Stülpmomenten, Abmessungen und Bauteilgewichten. Vorteilhaft zeigt sich dagegen die Nutzung des kraft- und formschlüssigen Verbindungssystems nach der EP 1 010 931. Ein günstiger Kraftfluß durch die verspannten Bauteile erzeugt optimale Dichtheitsvoraussetzungen. Zudem erfolgt die Übertragung der Belastungen nicht mehr über Schrauben, so dass demzufolge Undichtigkeiten infolge Schraubenrelaxation und Materialermüdung ausgeschlossen sind.

Ausführungsbeispiele der Erfindung werden anhand von schematischen Zeichnungen dargestellt und beschrieben.

Es zeigen:
- Fig.1: eine Schnittdarstellung von zwei auf einer Längsachse verbundenen Doppelrohrleitungen. Die Abdicht- und Verspannelemente sind mit einem Verbindungssystem nach der EP 1 010 931 verspannt. Dieses wirkt aussen an den ringförmigen Bauteilen.
- Fig.2: eine Schnittdarstellung von zwei auf einer Längsachse angeordneten Doppelrohrleitungen. Ein Verbindungssystem ist nicht dargestellt.
- Fig.3: eine Schnittdarstellung von zwei auf einer Längsachse verbundenen Doppelrohrleitungen. Die Abdicht- und Verspannelemente sind mit konventionellen Losflanschen verspannt. Der Innendurchmesser weist im Bereich der Verbindung eine Reduzierung auf.

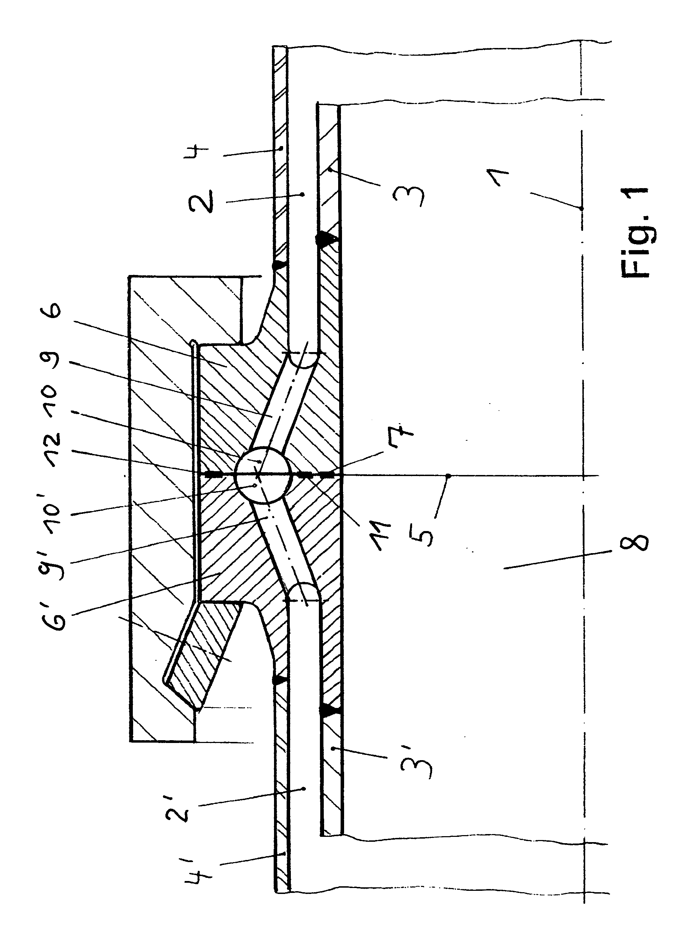

Fig. 1: In der Stirnflächenebene 5 weisen die ringförmigen Bauteile 6, 6' je eine Ringnut 10, 10' auf. Gegenüberliegend ist jeweils ein Innenrohr 3, 3' und ein Aussenrohr 4, 4' angeschweißt. Zwischen diesen liegen die Ringräume 2, 2' zur Aufnahme eines Heiz- / Kühlmediums als Wärmeträger. Gleichmäßig über dem Umfang angeordnete Bohrungen 9, 9' verlaufen von den Ringräumen zu den Ringnuten 10, 10'. Diese weisen beidseitig Dichtungen 11, 12 auf, die den Wärmeträger sowohl zum Rohrinnenraum 8 als auch zur äusseren Umgebung hin abdichten. Unabhängig von der rotatorischen Lage der ringförmigen Bauteile 6, 6' zueinander sind die Ringräume 2, 2' miteinander verbunden. Dargestellt ist die Verspannung mit dem Verbindungssystem nach der EP 1 010 931.

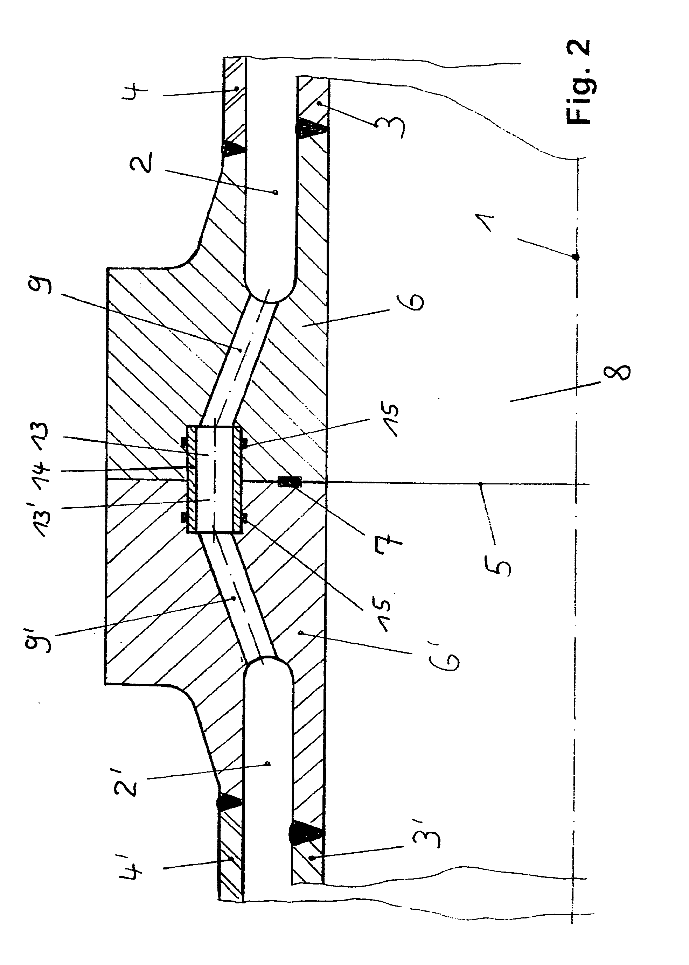

Fig. 2: Ein äusseres Verbindungssystem ist nicht mit dargestellt. Die ringförmigen Bauteile 6, 6' weisen im Bereich der Stirnflächenebene 5 Eindrehungen 13, 13' auf. Gegenüberliegend ist jeweils ein Innenrohr 3, 3' und ein Außenrohr 4, 4' angeschweißt. Zwischen diesen liegen die Ringräume (2, 2') zur Aufnahme eines Heiz- / Kühlmediums als Wärmeträger. Gleichmäßig über dem Umfang angeordnete Bohrungen 9, 9' verlaufen von den Heiz- / Kühlräumen 2, 2' zu den Eindrehungen 13, 13'. In diesen sind Einsteckhülsen 14 angeordnet. Zwischen diesen und jedem der ringförmigen Bauteile 6, 6' sind Dichtungen 15 angeordnet. Sie dichten den Wärmeträger sowohl zum Rohrinnenraum 8 als auch zur äusseren Umgebung hin ab.

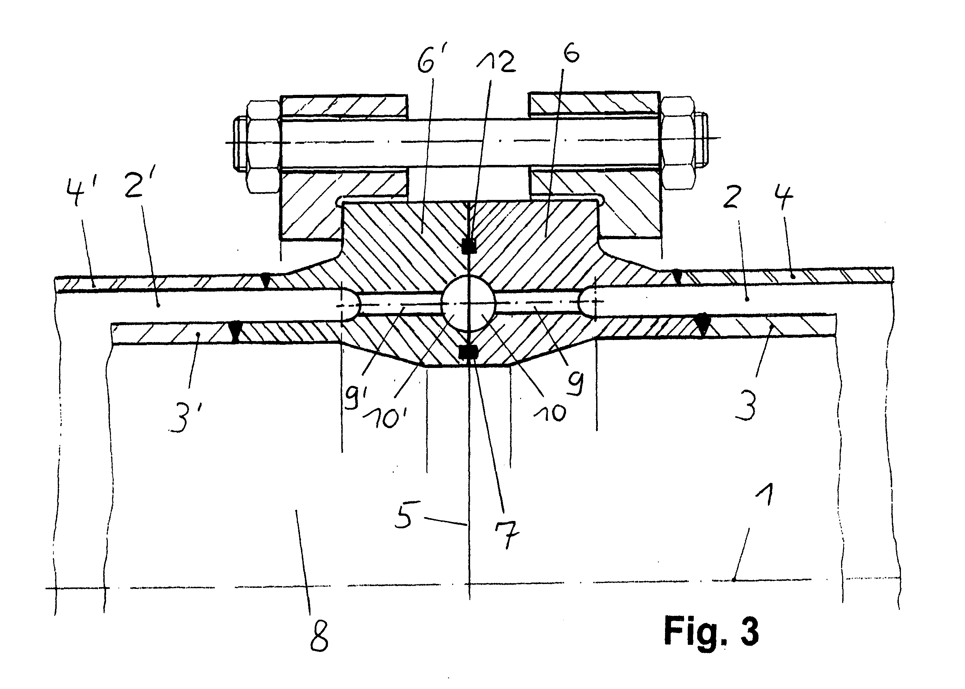

Fig. 3: Die Abbildung zeigt die Verspannung der Abdicht- und Verspannelemente mit konventionellen Losflanschen. In der Stirnflächenebene 5 weisen die ringförmigen Bauteile 6, 6' je eine Ringnut 10, 10' auf. Radial nach aussen gerichtet ist eine Dichtung 12 angeordnet, die den Wärmeträger zur äusseren Umgebung hin abdichtet. Die Abdichtung zum Rohrinnenraum 8 erfolgt durch die radial nach innen liegende Dichtung 7, die zugleich den Rohrinnenraum 8 mit abdichtet. Der Innendurchmesser ist im Bereich der Stirnflächenebene reduziert. Dieses ermöglicht eine kostengünstige Herstellung der Bohrungen 9, 9' parallel zur Längsachse 1.

### Bezugsziffernliste:

- 1: Längsachse der zu verbindenden Doppelrohrleitungen
- 2, 2': Ringraum zur Aufnahme eines Wärmeträgers
- 3, 3': Innenrohre der Doppelrohrleitungen
- 4, 4': Außenrohre der Doppelrohrleitungen
- 5: Stirnflächenebene
- 6, 6': ringförmige Bauteile
- 7: Dichtung
- 8: Rohrinnenraum
- 9, 9': Bohrungen zum Durchströmen des Wärmeträgers
- 10, 10': umlaufende Ringnut
- 11, 12: Dichtungen
- 13, 13': Ausnehmungen zur Aufnahme von Einsteckhülsen
- 14: Einsteckhülsen
- 15: Dichtung

## Patentansprüche

1. Abdicht- und Verspannelement zum Anschweißen an zwei auf einer Längsachse (1) lösbar zu verbindenden Doppelrohrleitungen,
mit zwei Ringräumen (2, 2') zur Aufnahme eines Heiz-/ Kühlmediums als Wärmeträger zwischen konzentrisch angeordneten Innen- (3, 3') und Außenrohren (4, 4'),
mit an diesen angeschlossenen, im Bereich einer Stirnflächenebene (5) aneinander liegenden ringförmigen Bauteilen (6, 6')
und mit einer Dichtung (7) zum Abdichten eines Rohrinnenraumes (8),
**dadurch gekennzeichnet,**
**dass** zum Durchströmen des Wärmeträgers durch die ringförmigen Bauteile (6, 6') in diesen über dem Umfang verteilt eine Vielzahl von Bohrungen (9, 9') angeordnet sind, die sich vom jeweiligen Ringraum (2, 2') zu einem Bereich in der Stirnflächenebene (5) hin erstrecken, der sowohl zum Rohrinnenraum (8) als auch zur äußeren Umgebung hin abgedichtet ist,
und **dass** die Bohrungen (9, 9') in Umfangsrichtung einen Mittenabstand zueinander aufweisen, der so klein ist, dass sowohl ein geringer Strömungswiderstand für den Wärmeträger als auch ein optimaler Wärmeübergang zwischen diesen und den ringförmigen Bauteilen (6, 6') bei einem ausreichend großen Querschnitt zwischen zwei nebeneinander liegenden Bohrungen (9, 9') zur Aufnahme der Belastungen aus temperaturbedingten Längendifferenzen zwischen den Innen- (3, 3') und Außenrohren (4, 4') gegeben ist.

2. Abdicht- und Verspannelement nach Anspruch 1,
**dadurch gekennzeichnet,**
**dass** der Bereich der einmündenden Bohrungen (9, 9') in der Stirnflächenebene (5) radial nach aussen und innen gerichtet Dichtungen (11, 12) aufweist.

3. Abdicht- und Verspannelement nach Anspruch 1,
**dadurch gekennzeichnet,**
**dass** der Bereich der einmündenden Bohrungen (9, 9') in der Stirnflächenebene (5) eine radial nach aussen gerichtete Dichtung (12) aufweist, wobei radial nach innen gerichtet die Abdichtung zum Rohrinnenraum (8) von der einen Dichtung (7) mit übernommen wird.

4. Abdicht- und Verspannelement nach Anspruch 1,
**dadurch gekennzeichnet,**
**dass** der Bereich der einmündenden Bohrungen (9, 9') in der Stirnflächenebene (5) einzelne den Querschnitt einer Bohrung (9, 9') umfassende Dichtungen (13) aufweist.

5. Abdicht- und Verspannelement nach Anspruch 2 oder 3,
**dadurch gekennzeichnet,**
**dass** an einem oder an beiden ringförmigen Bauteil(en) (6, 6') eine umlaufende zur Stirnflächenebene (5) hin offene Ringnut (10, 10') angeordnet ist, in der die Bohrungen (9, 9') einmünden,
so dass unabhängig von der rotatorischen Lage der ringförmigen Bauteile (6, 6') zueinander die Ringräume (2, 2') miteinander verbunden sind.

6. Abdicht- und Verspannelement nach Anspruch 1,
**dadurch gekennzeichnet,**
**dass** an jedem der ringförmigen Bauteile (6, 6') über dem Umfang verteilt von der Stirnflächenebene (5) ausgehende Ausnehmungen (13, 13') angeordnet sind,
**dass** in jeder Ausnehmung (13, 13') eine Bohrung (9, 9') mündet,
**dass** in jeweils zwei gegenüberliegenden Ausnehmungen (13, 13') eine Einsteckhülse (14) angeordnet ist
und **dass** zwischen jedem der ringförmigen Bauteile (6, 6') und der Einsteckhülsen (14) Dichtungen (15) angeordnet sind.

7. Abdicht- und Verspannelement nach einem oder mehreren der Ansprüche 1 bis 6,
**dadurch gekennzeichnet,**
**dass** die Verspannung der Doppelrohrleitungen in Richtung der Längsachse (1) mit einem aussen an den ringförmigen Bauteilen (6, 6') wirkenden Verbindungssystem erfolgt.

8. Abdicht- und Verspannelement nach einem oder mehreren der Ansprüche 1 bis 6,
**dadurch gekennzeichnet,**
**dass** die Verspannung der Doppelrohrleitungen in Richtung der Längsachse (1) mit einem Verbindungssystem erfolgt, welches an einem oder an beiden der ringförmigen Bauteile (6, 6') direkt angeordnet ist.

9. Abdicht- und Verspannelement nach einem oder mehreren der Ansprüche 1 bis 8,
**dadurch gekennzeichnet,**
**dass** die Bohrungen (9, 9') in Umfangsrichtung einen Mittenabstand zueinander aufweisen, der nicht grösser ist als das 5-fache ihres Durchmessers.
